# DEMANDE DE BREVET EUROPEEN

(11) **EP 3 868 265 A1**
(43) Date de publication de la demande: **25.08.2021**
(21) Numéro de dépôt: 20158211.1
(22) Date de dépôt: 19.02.2020
(51) Int. Cl.: A47J 37/06

(54) **DISPOSITIF DE CUISSON**

(71) Demandeur: BaByliss Faco sprl, 4020 Wandre (BE)
(72) Inventeur: JULEMONT, Pierre, 4630 SOUMAGNE (BE); GOERING, Alain, 4000 Liège (BE); ERNOTTE, Aubry, 4910 Theux (BE)
(74) Mandataire: AWA Benelux

(57) **Abrégé**

La présente invention divulgue un dispositif de cuisson électrique (1) comportant un bâti inférieur (2) et un bâti supérieur (3) articulés autour d'un axe de pivotement, lesdits bâtis inférieur et supérieur comprenant chacun :
- une plaque de cuisson amovible (5, 6);
- une résistance chauffante (7);
- une plaque de réflexion thermique périphérique (8, 9);
- une plaque de réflexion thermique pour résistance chauffante (10, 11);
caractérisé en ce que le bâti supérieur comporte au moins une plaque isolante (14) et en ce que le bâti inférieur comporte un orifice d'égouttage principal (12) dans la plaque de réflexion thermique inférieure(8) permettant l'évacuation des liquides générés, en utilisation, vers un réceptacle (4) situé sous le bâti inférieur

## Description

### Objet de l'invention

La présente invention se rapporte à un dispositif de cuisson électrique, tel un fer à gaufre ou un grill, dans lequel la nourriture est cuite par contact avec deux plaques chauffantes inférieure et supérieure. La présente invention se rapporte en particulier à un dispositif de cuisson pourvu d'une évacuation spécifique, en cas de débordement de liquides ou de pâte.

### Etat de la technique

Les dispositifs de cuisson, de type fer à gaufre ou grill, sont bien connus de l'homme du métier. Ceux-ci comprennent généralement deux parties articulées comprenant chacune une plaque de cuisson ainsi qu'une résistance chauffante en contact avec cette plaque. Les deux parties articulées sont refermées lors de la cuisson se faisant face, et les aliments sont disposés entre celles-ci pour être en contact avec les deux plaques chauffantes.

Un tel dispositif est par exemple décrit dans le document EP 1400194 A1. Les plaques de cuisson de ce document possèdent des empreintes aptes à recevoir les aliments. Une résistance électrique est disposée contre chaque plaque de cuisson, du côté opposé à la face comportant les empreintes. Une plaque de réflexion thermique englobe chaque résistance électrique de sorte à former un logement recevant cette dernière, et permettant de réfléchir la chaleur émise par la résistance vers les plaques de cuisson.

A l'heure actuelle, les conditions d'homologation de tels dispositifs sont de plus en plus sévères. Les parois extérieures du dispositif ne peuvent dépasser un certain seuil de température afin d'éviter à l'utilisateur de se brûler. L'amélioration de l'isolation de l'appareil permet d'obtenir une température de cuisson plus homogène, évitant les pointes de températures locales. Par ailleurs, une nouvelle réglementation oblige également ces dispositifs à satisfaire à un test de température en supplément du test de débordement préexistant. Le test de débordement consiste à remplir les empreintes des plaques de cuisson à 115% de leur capacité et à analyser si le dispositif est capable d'évacuer le trop plein de liquide/pâte sans que cela ne déborde de manière incontrôlée entre les deux parties articulées de l'appareil.

Il existe déjà des dispositifs de récupération de jus de cuisson dans le cadre des grills, mais ceci n'est pas le cas dans les appareils de cuisson de type fer à gaufre ou croque-monsieur.

Le document US20040217109 décrit un dispositif de cuisson électrique comprenant deux parties articulées. Chaque partie est formée d'une coque creuse sur laquelle est fixée de manière amovible une plaque de cuisson. Un élément chauffant est logé dans l'espace formé entre la coque et la plaque de cuisson. Une plaque de réflexion thermique est prévue en dessous de l'élément chauffant, c'est-à-dire entre ce dernier et le fond de la coque de manière à diminuer les pertes de chaleur vers l'extérieur de l'appareil. La particularité de ce dispositif de cuisson est que la plaque de cuisson de l'une des parties articulées est pourvue d'un orifice central, ce qui permet au jus de cuisson d'être évacué par cet orifice pour tomber sur la plaque de réflexion. Celle-ci comprend à son tour un orifice de sortie pour évacuer le jus de l'appareil dans un réceptacle amovible prévu dans la coque.

Les appareils de cuisson de l'état de la technique ne sont pas pourvus de dispositifs d'évacuation permettant de gérer de grandes quantités de liquides. En effet, à l'heure actuelle, les dispositifs de récupération permettent de recueillir le jus de cuisson dans des conditions de fonctionnement théoriques, mais ne garantissent pas une protection satisfaisante selon les nouvelles normes. Ils n'évitent pas l'écoulement des jus hors de l'appareil entre les deux plaques de cuisson.

### Buts de l'invention

La présente invention vise à surmonter les inconvénients de l'état de la technique. Elle vise en particulier à fournir un appareil de cuisson électrique pourvu d'un dispositif de récupération des liquides en cas de débordement, afin d'éviter d'endommager l'appareil.

La présente invention permet également d'améliorer les performances thermiques de l'appareil en améliorant l'isolation de la coque.

### Résumé de l'invention

La présente invention divulgue un dispositif de cuisson électrique comportant un bâti inférieur et un bâti supérieur articulés autour d'un axe de pivotement, lesdits bâtis inférieur et supérieur comprenant chacun :
- une plaque de cuisson amovible ;
- une résistance chauffante ;
- une plaque de réflexion thermique périphérique ;
- une plaque de réflexion thermique pour résistance chauffante;
caractérisé en ce que le bâti supérieur comporte au moins une plaque isolante et en ce que le bâti inférieur comporte un orifice d'égouttage principal dans la plaque de réflexion thermique inférieure permettant l'évacuation des liquides générés, en utilisation, vers un réceptacle situé sous le bâti inférieur.

L'invention comporte au moins une ou une combinaison adéquate des caractéristiques suivantes :
- la plaque de réflexion thermique pour résistance chauffante du bâti inférieur comprend un orifice d'égouttage secondaire permettant l'évacuation des liquides générés, en utilisation, vers l'orifice d'égouttage principal ;
- l'orifice d'égouttage principal est situé dans un renfoncement générant un niveau bas dans la plaque de réflexion thermique périphérique inférieure ;
- l'orifice d'égouttage secondaire est situé au-dessus de l'orifice d'égouttage principal ;
- la plaque de cuisson inférieure comprend une gouttière permettant d'évacuer les jus de cuisson à l'extérieur du dispositif et le réceptacle dépasse du bâti inférieur afin de recueillir les jus de cuisson évacués par ladite gouttière ;
- le réceptacle est amovible ;
- les plaques de cuisson sont en retrait par rapport à la plaque de réflexion périphérique à l'exception de la gouttière ;
- le réceptacle est situé à l'arrière du dispositif, en dessous du bâti inférieur;
- une structure de maintien permet de soutenir le réceptacle sous le bâti inférieur ;
- les plaques de cuisson comprennent des empreintes aptes à recevoir les aliments.

### Brève description des figures

La figure 1 représente un exemple de dispositif de cuisson électrique selon l'invention en position ouverte et comportant des plaques de cuisson à empreintes de type « grill ».
La figure 2 représente un exemple de dispositif de cuisson électrique selon l'invention en position ouverte et comportant des plaques de cuisson à empreintes de type « croque-monsieur/gaufrier ».
La figure 3 représente une coupe transversale d'un exemple de dispositif de cuisson selon l'invention, en position fermée. Les plaques de cuisson sont de type « croque-monsieur/gaufrier » sur cette figure.
La figure 4 représente une coupe transversale d'un exemple de dispositif de cuisson selon l'invention, en position fermée. Ici les plaques de cuisson sont de type « grill ».

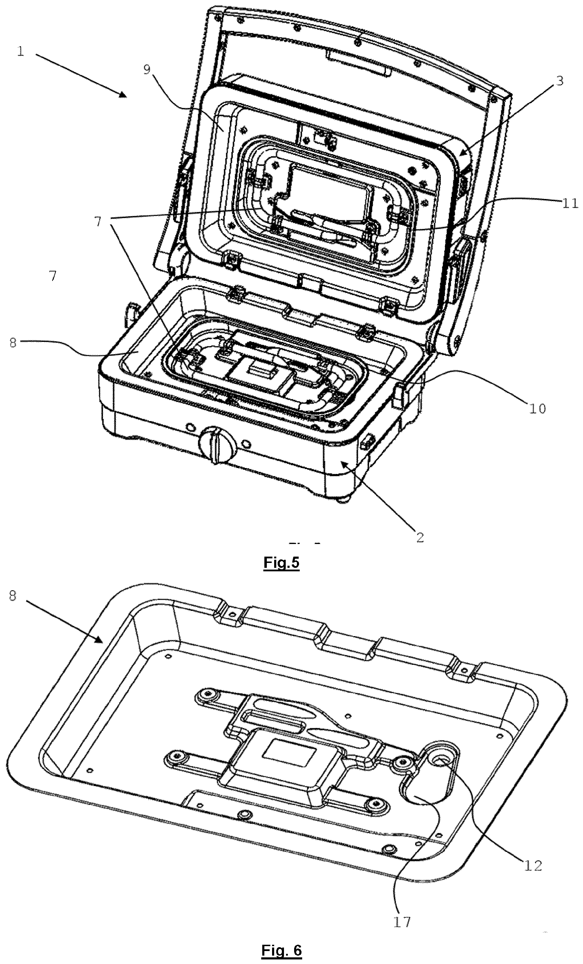

La figure 5 représente un exemple de dispositif de cuisson électrique selon l'invention, en position ouverte et sans plaques de cuisson amovibles.
La figure 6 représente la première plaque de réflexion thermique du dispositif de cuisson selon l'invention.
La figure 7 représente la seconde plaque de réflexion thermique du dispositif de cuisson selon l'invention.
La figure 8 représente la seconde plaque de réflexion thermique du dispositif de cuisson selon l'invention, avec la résistance chauffante.

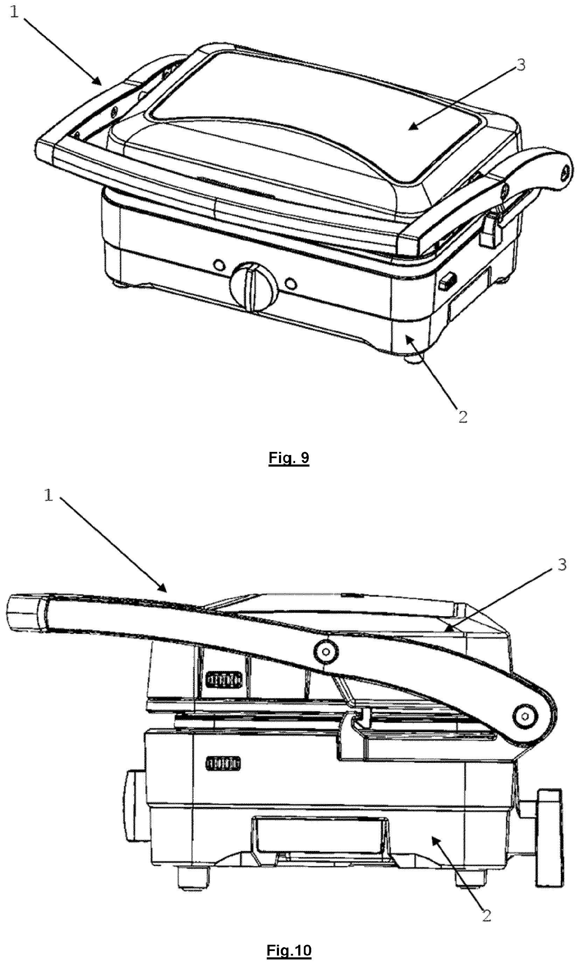

Les figures 9 et 10 représentent deux vues en perspective d'un exemple du dispositif de cuisson selon l'invention, celui-ci étant en position fermée.

### Références numériques des figures

1 : dispositif de cuisson électrique
2 : bâti creux inférieur du dispositif de cuisson
3 : bâti creux supérieur du dispositif de cuisson
4 : réceptacle de réception des liquides
5 : plaque de cuisson amovible inférieure
6 : plaque de cuisson amovible supérieure
7 : résistance chauffante
8 : plaque de réflexion thermique périphérique inférieure
9 : plaque de réflexion thermique périphérique supérieure
10 : plaque de réflexion thermique pour résistance inférieure
11 : plaque de réflexion thermique pour résistance supérieure
12 : orifice d'égouttage principal
13 : orifice d'égouttage secondaire
14 : plaque isolante
15 : empreinte de plaque de cuisson
16 : bords externes de la plaque de cuisson
17 : renfoncement dans la plaque de réflexion thermique périphérique inférieure
18 : poignée
19 : gouttière
20 : structure de maintien du réceptacle

### Description détaillée de l'invention

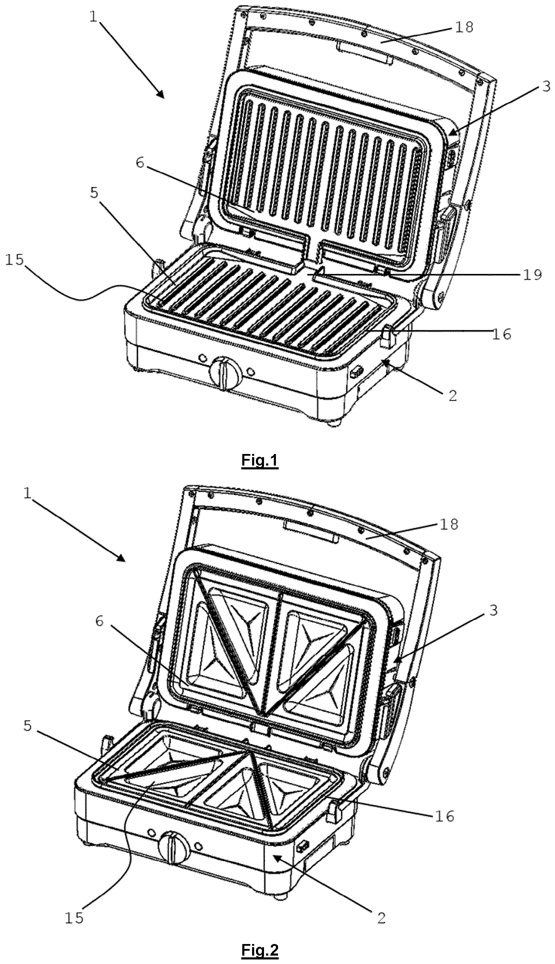

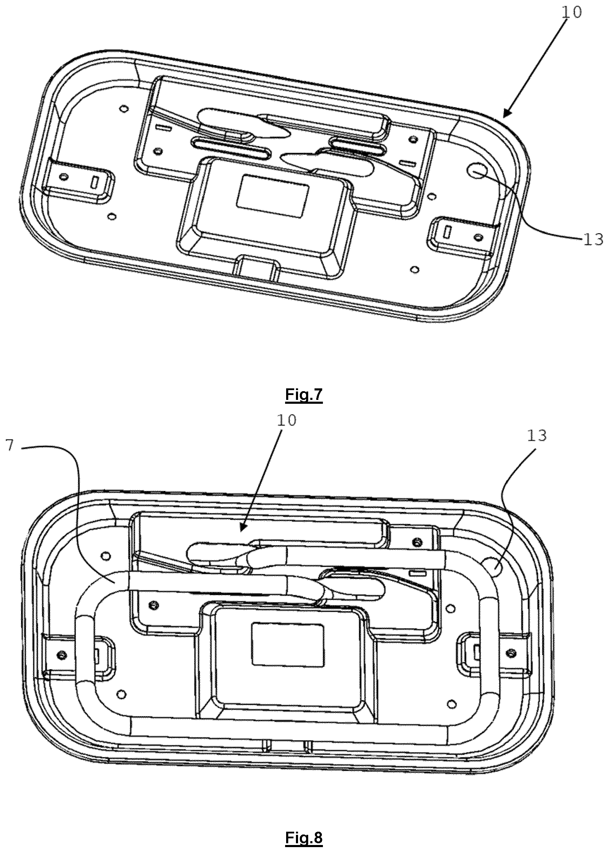

La présente invention divulgue un dispositif de cuisson électrique 1, de type fer à gaufre ou grill, comprenant deux bâtis externes articulés 2 et 3 tel que représenté sur les figures 1 et 2. Les deux bâtis sont creux de manière à former l'enveloppe externe du dispositif. Comme illustré sur la figure 7, chaque bâti coopère avec une plaque de cuisson amovible 5 et 6 et accueille une résistance chauffante 7. Lors de la cuisson, les deux parties articulées sont refermées pour se faire face, les aliments étant disposés entre celles-ci pour être en contact avec les deux plaques chauffantes.

Dans la présente description, les termes « inférieur » et « supérieur » qualifient les éléments relatifs respectivement à la partie inférieure et supérieure de l'appareil par rapport à sa position sur un plan de travail.

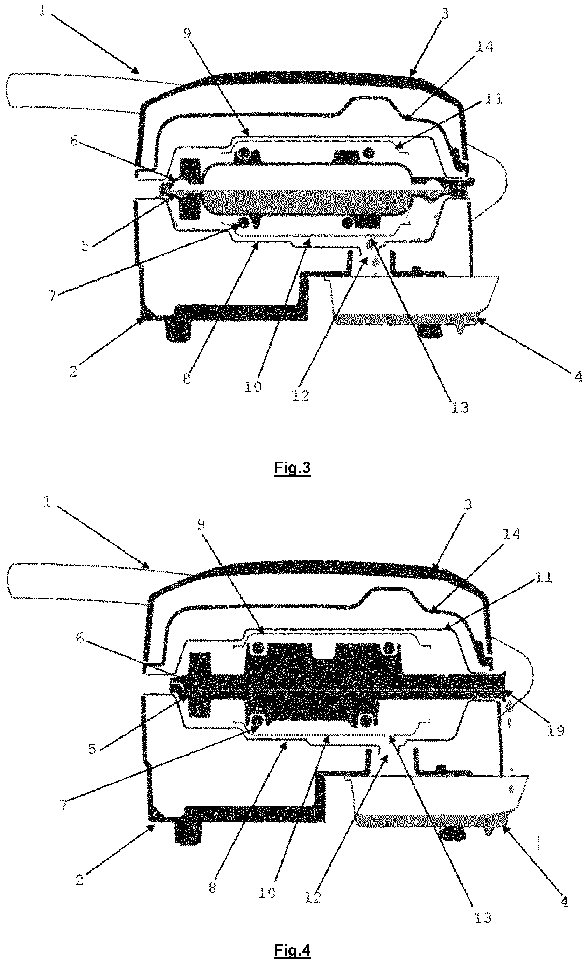

Tels que représentés sur les figures 3 et 4, des plaques de réflexion thermiques périphériques 8 et 9 sont prévues à l'intérieur de chaque bâti externe. Ceci permet de diminuer les pertes d'énergie thermique vers l'extérieur de l'appareil et de réfléchir la chaleur émise par la résistance chauffante vers les plaques de cuisson.

Un orifice d'égouttage principal 12 est prévu dans la plaque de réflexion thermique périphérique inférieure 8. Cet orifice est préférablement situé dans un renfoncement 18 générant un niveau bas dans la plaque de réflexion périphérique. Lorsque des liquides débordent des plaques de cuisson, ceux-ci peuvent s'infiltrer entre la plaque de cuisson inférieure et la plaque de réflexion périphérique inférieure, comme illustré sur la figure 3. Les liquides s'écoulent alors par gravité vers cet orifice d'égouttage principal. Un réceptacle 17 est situé sous le bâti, en dessous de l'orifice d'évacuation afin de recueillir les liquides. Ce réceptacle peut être amovible pour être vidangé.

Une plaque de réflexion thermique pour les résistances 10 et 11 est également prévue à l'intérieur de chaque bâti externe, entre la plaque de réflexion thermique périphérique et la plaque de cuisson amovible. Elle a pour but de protéger les éléments électriques de l'écoulement des liquides dans la plaque de réflexion périphérique inférieure, en étant surélevée par rapport à cette dernière. De plus, les bords externes de la plaque de réflexion pour les résistances sont préférablement en retrait par rapport aux bords externes de la plaque de cuisson, permettant aux liquides d'atteindre préférablement directement le fond de la plaque de réflexion thermique périphérique. Lorsque des liquides débordent de la plaque de cuisson, ceux-ci s'infiltrent entre la plaque de cuisson et le bâti externe et tombent dans la plaque de réflexion thermique périphérique 10. Comme la plaque pour la réflexion de la résistance thermique se trouve en retrait, les liquides risquent peu d'y tomber et les résistances sont protégées de cet écoulement, ainsi que les systèmes d'accroches et autres câbles. Si toutefois, comme illustré sur les figures 3 et 4, il arrivait que les liquides atteignent la plaque de réflexion des résistances 10, celle-ci comprend un orifice d'égouttage secondaire 13 pour évacuer les liquides vers le réceptacle 4, via l'orifice d'égouttage principal 12. De manière préférée, l'orifice d'égouttage secondaire est aligné verticalement avec l'orifice d'égouttage principal.

De préférence, la plaque de cuisson inférieure 5 comprend une gouttière 19 permettant d'évacuer les jus de cuisson également à l'extérieur du dispositif (voir figures 1 et 4). Ceci est préférablement le cas lorsque les plaques de cuisson sont de type « grill ». Les jus de cuisson sont évacués à l'extérieur de l'appareil, et sont récupérés dans le réceptacle 4 qui, dans ce cas, dépasse du bâti inférieur 2 afin de recueillir les jus évacués par la gouttière. Dans ce mode d'exécution, les jus de cuisson peuvent emprunter trois chemins différents avant d'être récupérés par le réceptacle.

De préférence, les bords externes de la plaque de réflexion pour résistance 10 remontent de sorte à former des parois latérales entourant les éléments électriques, comme une cuvette, pour les protéger de manière plus efficace des liquides présents dans la plaque de réflexion périphérique inférieure.

Le dispositif de cuisson de la présente invention comprend également un système d'isolation thermique pour diminuer les pertes de chaleur vers l'extérieur de l'appareil et pour homogénéiser la température de chauffe au sein de l'appareil. Les parois extérieures du dispositif, une fois fermé et en utilisation, ne doivent pas dépasser 90°C pour les surfaces faiblement conductrices comme les matières plastiques et 70 °C pour les métaux, ceci pour une chauffe de 220 à 240°C maximum des plaques de cuisson. Ceci permet d'éviter à l'utilisateur de se brûler. Comme représenté sur les figures 3 et 4, le bâti supérieur du dispositif comprend au moins une plaque d'isolation 14.

Dans un mode de réalisation avantageux de l'invention, les plaques de cuisson possèdent des empreintes 15 aptes à recevoir les aliments. Celles-ci peuvent être de type « grill » comme illustré sur la figure 1, de type « croque-monsieur » comme illustré sur la figure 2, ou bien de tout autre type de forme.

Par ailleurs, les résistances chauffantes de chaque partie articulée 2 et 3 peuvent être chauffées indépendamment l'une de l'autre.

## Revendications

1. Dispositif de cuisson électrique (1) comportant un bâti inférieur (2) et un bâti supérieur (3) articulés autour d'un axe de pivotement, lesdits bâtis inférieur (2) et supérieur (3) comprenant chacun :
- une plaque de cuisson amovible (5, 6) ;
- une résistance chauffante (7) ;
- une plaque de réflexion thermique périphérique (8, 9) ;
- une plaque de réflexion thermique pour résistance chauffante (10, 11) ;
**caractérisé en ce que** le bâti supérieur (3) comporte au moins une plaque isolante (14) et **en ce que** le bâti inférieur (2) comporte un orifice d'égouttage principal (12) dans la plaque de réflexion thermique inférieure (8) permettant l'évacuation des liquides générés, en utilisation, vers un réceptacle (4) situé sous le bâti inférieur (2).

2. Dispositif de cuisson selon la revendication 1, **caractérisé en ce que** la plaque de réflexion thermique pour résistance chauffante (10) du bâti inférieur (2) comprend un orifice d'égouttage secondaire (13) permettant l'évacuation des liquides générés, en utilisation, vers l'orifice d'égouttage principal (12).

3. Dispositif de cuisson selon l'une quelconque des revendications précédentes, **caractérisé en ce que** l'orifice d'égouttage principal (12) est situé dans un renfoncement (17) générant un niveau bas dans la plaque de réflexion thermique périphérique inférieure (8).

4. Dispositif de cuisson selon l'une quelconque des revendications précédentes, **caractérisé en ce que** l'orifice d'égouttage secondaire (13) est situé au-dessus de l'orifice d'égouttage principal (12).

5. Dispositif de cuisson selon l'une quelconque des revendications précédentes, **caractérisé en ce que** la plaque de cuisson inférieure (5) comprend une gouttière (19) permettant d'évacuer les jus de cuisson à l'extérieur du dispositif (1) et **en ce que** le réceptacle (4) dépasse du bâti inférieur (2) afin de recueillir les jus de cuisson évacués par ladite gouttière (19).

6. Dispositif de cuisson selon l'une quelconque des revendications précédentes, **caractérisé en ce que** le réceptacle (4) est amovible.

7. Dispositif de cuisson selon l'une quelconque des revendications précédentes, **caractérisé en ce que** les plaques de cuisson (5, 6) sont en retrait par rapport à la plaque de réflexion périphérique (8,9), à l'exception de la gouttière (19).

8. Dispositif de cuisson selon l'une quelconque des revendications précédentes, **caractérisé en ce que** le réceptacle (4) est situé à l'arrière du dispositif (1), en dessous du bâti inférieur (2).

9. Dispositif de cuisson selon l'une quelconque des revendications précédentes, **caractérisé en ce qu'**une structure de maintien (20) permet de soutenir le réceptacle (4) sous le bâti inférieur (2).

10. Dispositif de cuisson selon l'une quelconque des revendications précédentes, **caractérisé en ce que** les plaques de cuisson (5, 6) comprennent des empreintes (15) aptes à recevoir les aliments.
